# EUROPEAN PATENT APPLICATION

(11) **EP 4 841 726 A1**
(43) Date of publication of application: **18.11.2026**
(21) Application number: 26178044.9
(22) Date of filing: 11.05.2026
(51) Int. Cl.: H01M 10/04, B65H 18/00

(54) **APPARATUS AND METHOD FOR MAKING A COIL**

(30) Priority: 15.05.2025 IT 202500010992
(71) Applicant: G.D S.p.A., 40133 Bologna (BO) (IT)
(72) Inventor: GAMBERINI, Giuliano, 40133 Bologna (BO) (IT); FORTINI, Massimo, 40133 Bologna (BO) (IT); VILLA, Stefano, 40133 Bologna (BO) (IT)
(74) Representative: Leone, Mario

(57) **Abstract**

An apparatus for making a coil is described comprising: a frame; a supply unit configured to supply at least one tape suitable for making at least one coil; a winding unit connected to the frame in a predetermined position, including at least one winding head therein, configured to wind said tape so as to make said coil, wherein, the supply unit comprises a respective compensation device adapted to hold a quantity of tape of variable length, a compensation device having an outlet section which is fixed with respect to the frame, and from which the respective tape is sent directly to the winding unit; and wherein the winding unit comprises, for each tape, an inlet section which is fixed with respect to the frame, and from which the tape is deflected in the direction of the winding head, the distance between the outlet section of the compensation device and the inlet section of the winding unit being smaller than the distance between the inlet section of the winding unit and the winding head.

## Description

The present invention relates to an apparatus for making a coil, for example of the type formed by winding a tape-like article which includes a tape or a plurality of overlapping tapes.

The invention also relates to a method for making the coil.

The present invention finds a preferred, although not exclusive, application in the field of the production of electrochemical cells, for the production of which a winding of a tape-like article is used.

In particular, in the pertinent technical sector, it is known to combine conductor tapes and separator tapes into layers in order to form an anode and cathode structure. The article made by overlapping the aforesaid layers is then wound into a coil and is used to make the electrochemical cell itself.

An example of apparatus and method for making batteries by winding conductor tapes and separator tapes is described in WO2010023525A1.

In the present description as well as in the accompanying claims, certain terms and expressions are deemed to have, unless otherwise expressly indicated, the meaning expressed in the following definitions.

The term "tape-like article" is intended to mean any solid product which, within an industrial production line, is presented in the form of an elongated tape or strip, i.e. an element in which the longitudinal extension is significantly greater than its transversal extension. The tape-like article can be formed by a single tape or strip of material, or by overlapping several tapes arranged in layers.

The tape-like article also has features that allow a certain bending during its advancing along a relative production line.

The tape-like article can for example be made by overlapping conductor and insulating layers alternated with each other and be intended to form a sandwich to be wound for making a coil intended for the production of electrochemical cells.

The term "winding" is intended to mean making a spiral structure by rotation of a tape, a strip or more generally a tape-like article about an axis, a flat surface or another structure. By winding, the tape-like article will form one or more turns about the axis or the structure.

The term "coil" is intended to mean any spiral structure formed by winding a tape, a strip or more generally a tape-like article about an axis, a flat surface or another winding structure. Depending on the structure about which the tape-like article is wound, the overall shape of the coil may be substantially cylindrical rather than crushed or otherwise shaped.

As mentioned above, the coil can be applied not only in the electrochemical cell sector but also in other sectors, such as for example in the capacitor sector, within which coil-shaped structures can likewise be used.

The term "continuous" referring to an expression of motion, is intended to mean an operation that takes place without interruption, without there being a stop or an interruption in the operation in question. In particular, with reference to the movement of a tape or of another element, the term "continuous" indicates that the tape, or a portion thereof, is never stopped during its movement.

The term "substantially constant" referring to a measure or quantity, such as for example the speed of displacement of an object, is intended to mean that said measure or quantity maintains, over time, a value which preferably varies by a maximum of ±10%, preferably by a maximum of ±5%, preferably by a maximum of ±2%.

It should also be specified that the expression "to displace an object between a first position and a second position" is intended to mean both the displacement from the first position to the second position and the displacement from the second position to the first position.

This definition applies in an analogous way to similar expressions of motion, such as for example to transfer or to move a generic object between two positions or between two zones or even between two different operating configurations.

In this context, the term "kinematically independent" is intended to mean two or more systems that are able to perform movements completely independently and separately. In other words, kinematically independent systems or devices are configured in such a way that they can carry out their intended movements without changing the position of other involved systems. It is also significant to understand that this condition of kinematic independence does not exclude that different systems or devices can cooperate and/or transfer material to each other along common and substantially overlapping segments of space.

It is further important to note that this condition of kinematic independence does not exclude that parts different and directly independent from each other have a common driving origin. In this sense, kinematically independent systems could be moved, for example, by a same drive shaft by means of different types of drive connections, while still realising their own motions that do not directly influence each other.

The term "movable" refers to portions or devices provided with the ability to move through space. It is relevant to note that these portions or devices can be movable both because they are provided with their own means of displacement and because they are constrained to further portions configured with displacement abilities.

The term "essentially horizontal" means that a direction of displacement remains constant with a possible angular variation with respect to the horizon of between ±15°, e.g. between ±10°, e.g. between ±5° e.g. completely horizontal, with an angular variation of 0° from the horizon.

Furthermore, the term "substantially horizontal" means that a direction of displacement comprises a horizontal stretch equal to at least 60% of the total displacement thereof, or e.g. equal to 80% of the total displacement thereof, or e.g. completely horizontal with a horizontal stretch equal to 100% of the total displacement thereof. In other words, the term "substantially horizontal" also comprises laws of motion that involve, for example, a first horizontal stretch, a second possibly short vertical stretch, with a change of height, a third horizontal stretch equal in direction opposite to the first horizontal stretch, and a fourth vertical stretch equal in direction opposite to the second vertical stretch, so as to return to the initial position prior to the first horizontal stretch.

The terms "upstream" and "downstream" indicate operating steps that have their own specific position in the sequencing of a process.

More specifically, if operation B occurs upstream of operation A, it means that operation B will occur sequentially before said operation A.

Similarly, if operation B occurs downstream of operation A, it means that this operation B will occur sequentially after said operation A.

These considerations for operational steps also apply to devices and/or their portions that are positioned respectively upstream or downstream of others according to the sequential operating flow of the process considered and described.

The term "substantially constant tension" refers to a tension that remains constant with a variation between ±15%, or e.g. between ±10%, or e.g. between ±5% during the operating steps of the apparatus or process. Furthermore, in the context of the present invention, the constant state of tension can preferably be manifested in a constant speed of a tape-like article during the steps of supplying and winding referring thereto.

In this context, the terms "inlet section" and "outlet section", referring to a compensation device or any unit through which a tape may be deflected, tensioned, compensated and stored, mean the section through which the tape passes at the last point of inflection or contact between the tape and the last member of the compensation device or unit contacting the tape in the advancing direction of the tape itself, such as for example the last roller or pair of rollers contacting the tape exiting from a compensation device.

At said inflection point, a deflection of the tape according to a predetermined angle is induced in the section. In the following, the term "deflection angle" is understood to be the angle, less than 180°, comprised between the two stretches of tape, between which the deflection occurs at the contact element, such as for example a roller, that determines it.

Similarly, in this context, when the term "distance" refers to an outlet section or an inlet section, it means the scalar value of the minimum spatial clearance in a straight line between the sections, measured at the last point of contact between tape and last compensation element contacting the tape and the first point of contact between tape and first subsequent element contacting the tape: these contact points are determined respectively from the point of intersection between the outlet section of the compensator and the mid-plane of the tape and from the point of intersection between the inlet section of the movable portion and the mid-plane of the tape.

In this context, the term "active regulation systems" refers to systems that perform operations which vary longitudinal features of the tape such as, for example, length by means of cutting operations, tension by means of tensioning devices, tape advancing speed or the quantity of tape unwound by means of pulling devices, or similar technical solutions.

In this context, the term "passive regulation systems" identifies systems that are not active regulation systems and can, by way of example, perform operations such as transverse tape alignment, e.g. by means of devices consisting of two or more alignment rollers, or positioning operations, e.g. by means of return rollers, or folding operations, e.g. by means of suitably shaped surfaces.

In this context, the terms system, device or "dispensing" unit are used to identify coil-loading assemblies, i.e. the device that supports and dispenses the coil, and not any additional unwinders that may be positioned in other parts of the tape advancing path.

The Applicant, in the context of the constant need to increase the performance and the efficiency of the production processes, has preliminarily observed how, in a production line for making a coil, the advancement rate of the tape-like article with respect to the unit that carries out the winding thereof can be an important element limiting the production capacity of the line itself.

Furthermore, this limitation is even more critical if high precision is required in the formation of the coil. In particular, the Applicant has noted that in many applications, such as for example in the production of electrochemical cells, high precision in the geometry of the windings must be ensured in order to ensure the required performance of the finished product.

The Applicant thus further perceived that in cases where the tape-like article is formed by several tapes, e.g. combined in a multilayer structure, it is possible to control the condition of the tape-like article by acting on the individual layers.

The Applicant lastly found that it is possible to increase the winding speed of the tape-like article with respect to the known solutions if the movement of the tape is not interrupted during the different steps of making the coil.

In fact, the Applicant has noted that these steps of interrupting and resuming the advancement of the tape-like article produce undesirable reductions in the production efficiency of the process together with increased wear of the moving parts which are subjected to increased acceleration and deceleration in order to try to compensate for these negative variations in productivity.

The Applicant also noted that conveying a variable number of tapes at high speed and in a continuous manner to form a tape-like article requires an extremely precise control of the tensions to which the individual tapes are subjected.

In this regard, the Applicant has also observed that the need to control the tension of the tapes from their unwinding from storage in coils is hampered by the need to supply the entire winding apparatus with new coils once the coils in use are depleted, without affecting the continuity of production.

The Applicant therefore noted that this also entails a further limitation in the freedom to design the moving parts and the functions they perform.

Additionally, the Applicant has noted the inertia of moving devices to ensure an adequate buffer of tapes to the apparatus makes the design of the entire apparatus extremely complex.

The Applicant has also noted that an unplanned shutdown of the apparatus can be even more critical if moving parts remain locked in positions that are not easily reached by the operator, e.g. because they are too high. Similar criticalities may additionally occur during normal equipment maintenance.

What is more, the Applicant has observed that, with respect to these newly observed problems, some processing steps are more relevant than others and can be advantageously modified without significantly compromising the process timing and thus the yield of the implemented apparatus.

In order to maintain a high speed of making a coil by means of a tape-like article while allowing a continuous process and minimising possible wear and tear, the Applicant therefore perceived that this could be achieved by ensuring an adequate compensation of the length of tape available for winding in the vicinity of the unit actually carrying out such winding.

The Applicant therefore further perceived how the production efficiency of electrochemical batteries from winding tapes can be increased with respect to the known solutions if such operations are carried out continuously, but without displacements of the entire assembly preceding winding, so as to minimise the effect of inertia.

The Applicant has noted that, downstream of the compensation organs, there may be considerable variations in the tension to which the tapes are subjected, and this could be remedied by reducing, downstream of the compensation members, the number of further members acting on the tapes and causing variations in tension, and in general also the length of the tape itself.

Finally, the Applicant has determined that placing the entire winding assembly near the members for compensating variations in the available lengths of the individual tapes to be wound enables the winding process to be uninterrupted and the dimensional accuracy of the final product to be uncompromised.

The Applicant therefore recognised that it was possible to assemble these components while minimising the effects of inertias and tensions produced by moving members, resulting in a particularly compact apparatus configuration.

Thanks to these features, the lengths available to the tape to be wound can still vary within sufficiently large margins to allow for continuous operation of the apparatus, enabling a high process yield, continuous advancement of processing operations and a minimisation of wear induced on predetermined moving parts.

CN 103 268 952 A and CN 109 155 443 B illustrate respective winding apparatuses, operating in particular in the field of battery coils that require additional tensioning devices between compensators and winding heads.

Therefore, in a first aspect thereof, the present invention relates to an apparatus for making a coil, preferably for an electrochemical cell intended for battery production.

Preferably, the aforesaid apparatus comprises a frame.

Preferably, the apparatus according to the invention then comprises a supply unit, which is configured to supply at least one tape, of a type suitable for making at least one coil, released from a respective dispensing device.

Preferably, this supply unit comprises at least one respective supply path of each tape it supplies to the devices downstream thereof.

Preferably, the apparatus for making a coil further comprises a winding unit that is connected to the aforesaid frame in a predetermined position.

Preferably, the winding unit comprises at least one winding head which is configured to wind said tape so as to make the coil, further comprising a respective gripping device which is configured to grip a portion of said at least one tape.

Preferably, in the apparatus according to the invention, at at least one supply path, the aforesaid supply unit comprises at least one respective compensation device which is adapted to hold a quantity of tape of variable length available for winding.

Preferably, in this compensation device, an outlet section is provided that is fixed with respect to the frame, and from which the respective tape is sent directly to the winding unit.

Preferably, in the apparatus according to the invention, the winding unit in turn comprises, for each tape, an inlet section which is fixed with respect to the frame, in which the tape supply path is directed in the direction of the winding head.

Finally, in the apparatus for making a coil, preferably the distance between the compensator outlet section and the winding inlet section is smaller than the distance between the winding inlet section and the winding head.

Thanks to these features, it is possible to produce the tape-like article according to a continuous process, particularly while making coils, minimising the effect of the inertia of the moving parts of the apparatus, while still ensuring an adequate buffer of available tape and reducing the size of the apparatus.

Thereby, both the productivity of the apparatus, in terms of coils wound per unit of time, and the average lifetime of the apparatus can be increased.

Based on a second aspect thereof, the present invention relates to a method for making a coil, preferably for an electrochemical cell intended for the production of batteries, said coil being made by winding at least one tape-like article.

Preferably, this method comprises a step of providing a supply unit for supplying at least one tape, of the type suitable for the production of at least one tape-like article.

Preferably, such a supply unit defines a respective supply path for each tape.

Preferably, the aforesaid supply path comprises at least one compensation device which is adapted to hold a quantity of said at least tape which is variable in length. This compensation device comprises a respective outlet section.

Preferably, the method then comprises a step of providing at least one winding unit which in turn comprises at least one winding head, the winding head being provided to receive said at least one tape from said at least one compensation device at a respective inlet section of the winding unit.

Preferably, in the method, the tape is wound by means of said winding head.

Preferably, the method for making a coil comprises a step of adjusting the supply quantity and/or speed of the tape at said inlet and outlet sections by means of said at least one compensation device.

Preferably, in the arrangement of this compensation device, the distance between the outlet and inlet sections is smaller than the distance between the inlet section and the winding head.

Thanks to these features, it is possible to produce the tape-like article according to a continuous process, particularly while making coils, minimising the effect of the inertia of the moving parts of the apparatus, while still ensuring an adequate buffer of available tape and reducing the size of the apparatus.

The present invention, in at least one of the aforesaid aspects, may have at least one of the further preferred features set out below.

Preferably, the compensation device, in its simplest design, comprises mutually movable rollers.

In particular, in the apparatus for forming coils, it can be envisaged that said at least one tape comprises at least one conductor tape and one separator tape, in order to enable the assembly of electrochemically active tapes.

Furthermore, in the apparatus for forming coils, it may be envisaged that said at least one tape comprises one or two pairs of tape and, preferably, each pair of tape can comprise a conductor tape and a separator tape, respectively.

Or, in the apparatus for forming coils, it may be envisaged that at least one tape comprises four tapes, of which two are separator tapes and two are conductor tapes.

In these apparatus configurations, each of said four tapes is compensated by a respective compensation device.

Preferably, the separator tapes are arranged during the winding step so as to separate the two conductor tapes and isolate them from the outside, forming an outer winding.

Thereby, the tape-like element thus produced is suitable for the formation of an electrochemical cell.

Furthermore, the separate compensation of the tapes will allow their optimal tensioning during the winding step, but also the compensation of discontinuities in dispensing a single tape that do not affect the other tapes.

In the apparatus, it is further envisaged that the compensation device comprises at least one movable element, such as a movable roller, and at least one fixed element, such as a fixed roller, which are configured to move with respect to each other and to vary the distance therebetween, so as to hold a quantity of tape of variable length, tensioned therebetween and with respect to the compensator outlet section.

This supply mode provides the winding unit with tape with a speed and tension within the envisaged operating parameters.

In the forming apparatus, the distance between the outlet section of the compensation device and the inlet section of the winding unit is also less than 500 mm, such as for example less than 300 mm or for example less than 150 mm, so as to ensure optimal compaction of the apparatus.

Preferably, the compensation devices extend, all or at least in part, in a main direction that is essentially horizontal, so that the apparatus develops in length and not in height, and is thus more easily accessible to an operator.

Preferably, at the tape inflection induced at said outlet section, for example in the point that is defined by the mechanical member, such as an idler roller, which identifies this outlet section, each tape is deflected by a deflection angle between 100° and 180° so as not to introduce excessive stress.

This angle is measured between the tape path before and the tape path after the point of contact with the tape-contacting element, for example the mechanical member (e.g. the roller), where the tape-contacting element is located within the angle itself.

Similarly, at said inlet section, each tape is deflected by an angle between 100° and 180°.

Furthermore, in the apparatus for forming coils, it can be envisaged that the conductor tape supply path adapted to form an electrode comprises an additional dynamic storage device upstream of the compensation device.

Thereby, the operating continuity of the apparatus is better ensured.

With reference to the latter feature, said further dynamic storage device extends according to a respective main direction which is inclined with respect to the main direction of the subsequent compensation device, and preferably this main direction is substantially perpendicular with respect to the main direction of the subsequent compensation device, so as to ensure maximum compactness of the apparatus.

In the above-mentioned cases, at least one active tape tension adjuster may be present between the compensation device and the additional dynamic storage device, in order to attenuate any unwanted stress between one compensation device and the next.

To simplify the structure of the apparatus, the additional dynamic storage devices and active adjusters can be mounted on a single support plate, which preferably can extend vertically in the frame.

Preferably, the winding unit comprises a movement device of the at least one winding head configured to move the at least one winding head along a respective working path.

Additionally, in the apparatus for forming coils, it may be envisaged that said winding head is movable along a respective working path, so that said at least one tape-like article is subjected to a substantially constant tension during winding, i.e. to a tension with a variation of no more than ±5% during the operating steps of the apparatus.

Preferably, the winding head is movable along the working path so that the at least one tape-like article is subjected to a substantially constant tension during the winding of the tape-like article by a respective winding head and as a result of the movement of the winding head in at least one stretch comprised between the supply unit and the at least one winding head.

Thereby, the tension of the tape-like article can be kept substantially constant, making the processing steps more efficient, reducing damage on the tape-like article itself and making the coil with high precision.

Furthermore, it is possible to process the tape-like article effectively without maintaining a constant profile and avoiding introducing unwanted damage or deformation.

Preferably, the at least one winding head and the compensation devices mounted in the frame are kinematically independent.

Preferably, the supply unit is configured so as to define a supply zone for each tape of the plurality of tapes, so as to envisage storage portions of the relative tapes moving synchronously, thus without any mutual misalignment and/or distortion introduced by different paths.

Preferably, the supply unit is configured so as to define a convergence zone, reducing the mutual distances between each tape to the coupling roller that makes the tape-like article.

It is thereby possible to optimally design the zone and process intended to form the final tape-like article. This condition is allowed by the possibility of making the storage/supply step of the tapes independent of the coupling/convergence step.

Preferably, each winding head supports a gripping device that is configured to grip a portion of said tape-like article, said gripping devices being further preferably configured to rotate on themselves about a winding axis so as to wind said tape-like article.

Thanks to this feature, the tape-like article can be easily gripped so that it can then be wound by rotation of the same device that grips it. Thereby the rotation speed as well as the trajectory and speed of the winding heads can be easily controlled while they are winding the tape-like article.

Preferably said supply unit defines a supply direction of said tape-like article.

Thereby the supply unit itself defines the direction in which the tape-like article is supplied, i.e. the direction in which it reaches the winding heads to then be gripped and wound.

If the tape-like article is formed by several tapes, the supply direction coincides with that of the article after the tapes have been combined between them.

It should be noted that with the term "contrary" and with its opposite term "concordant" referred to two directions, it is understood that these directions are travelled in opposite directions, with regard to contrary, or in the same direction, with regard to concordant.

The directions do not necessarily have to be parallel and, in this case, two directions will be considered contrary when the component of one direction substantially parallel to the second defines a path along which an object is moved in the opposite direction with respect to the other direction.

Preferably, said supply unit comprises an outlet opening thereof, through which said tape-like article transits out of said supply unit and is supplied to said winding unit, and an inlet opening thereof, preferably adapted to receive said at least one tape from a respective dispensing device, with a supply path of said tape which is comprised between said inlet section and said outlet section and having a complex path.

Preferably the apparatus comprises a cutting device configured so as to cut said tape-like article in a position downstream of said supply unit.

The cutting can be performed with any type of device, either contact cutting devices, such as for example a knife, or non-contact cutting, for example by means of laser ablation.

The presence of the cutting device downstream of the supply unit means that it is not necessary to stop the tape in the moment in which it is cut, making it possible to coordinate the cutting action with the movement of the head carried out by means of the relative movement device.

Preferably, the supply unit is configured to supply said tape-like article at a supply speed, and the winding head is configured to wind the tape at a winding speed moving at a respective displacement speed, said winding speed and said displacement speed preferably being such as to subject said tape-like article to said substantially constant tension.

It is thereby possible to control the tension by simply controlling the speeds on the basis of which the apparatus is made to operate, thus allowing easy control of the operating steps thereof.

Preferably said supply speed is substantially equal to the sum of said winding speed and said displacement speed.

This condition allows a substantially constant tension to be kept in the tape-like article, without the need for this to be stopped during winding or in general during the formation of the coil.

Preferably, said tape-like article comprises a plurality of tapes overlapped in layers, at least one of said tapes being continuously supplied.

Preferably said supply speed is constantly greater than zero, and preferably substantially constant, along said supply path.

These features allow each of them to make the coil without interrupting the supply of tape, thus avoiding interruptions in the movement of the tapes that could generate unwanted states of tension or in any case decrease the productivity of the apparatus.

The features and advantages of the invention will become clearer from the detailed description of an embodiment shown, by way of non-limiting example, with reference to the appended drawings in which:
- Figure 1 is a schematic, overall, and side view of an example of an apparatus for making coils according to the present invention, in particular an apparatus for the production of electrolytic cells formed by means of winding a tape-like article;
- Figure 2 is a schematic and side view of a portion of the apparatus of Figure 1, comprising a supply unit of tape to be wound and a winding unit operating in the apparatus for making a coil of the present embodiment;
- Figure 3 is a schematic and side view of a winding unit operating in the apparatus for making coils of the preceding figures;
- Figure 4 is a schematic and side view of a portion of the winding unit of Figure 3; and
- Figures 5A, 5B, 5C and 5D are schematic and side views showing, respectively, a first, second, third and fourth compensation device of the supply unit of Figure 2.

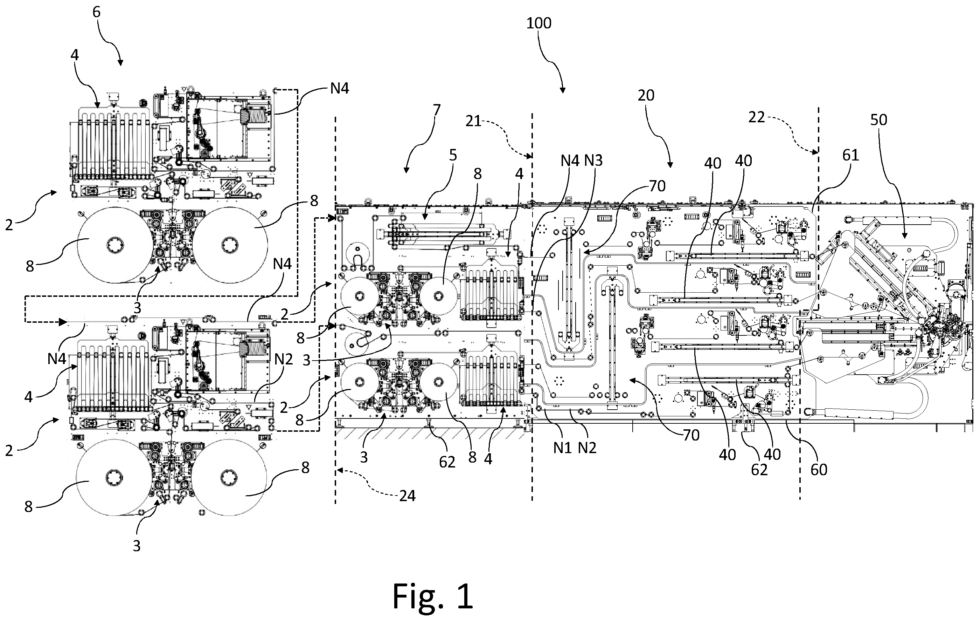

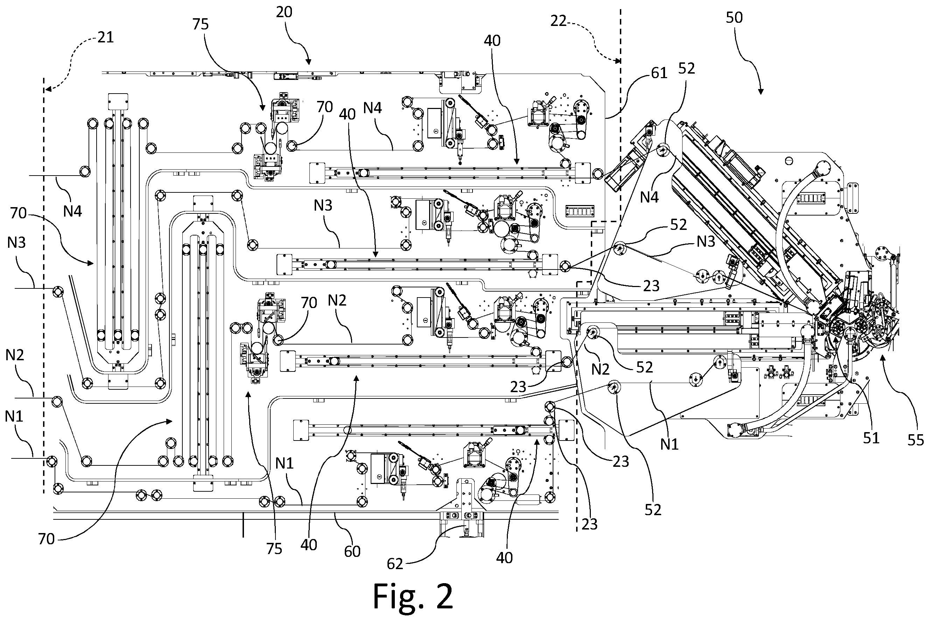

With reference to Figures 1 and 2, an apparatus for making a coil made in accordance with the present invention is indicated as a whole with 100.

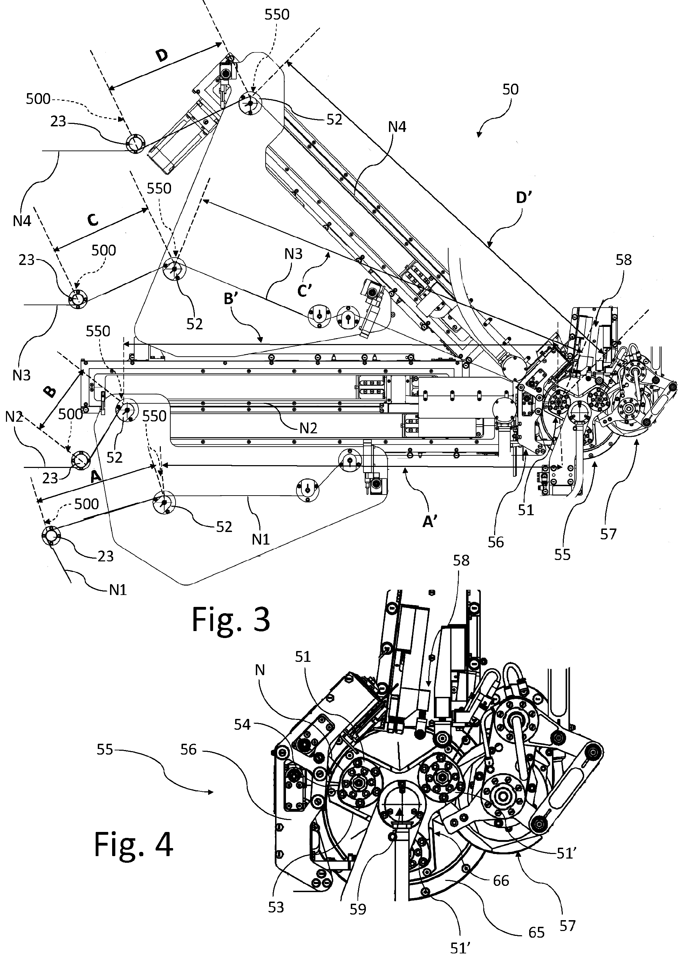

In preferred embodiments, the apparatus 100 is intended to carry out the winding of a tape-like article N intended for the production of electrochemical cells (Figure 4).

It is however understood that this represents a possible embodiment example and that the apparatus 100 according to the present invention may be intended for winding tape-like articles also intended for different uses, even in fields other than those relating to the production of electrochemical cells.

For example, still in the field of energy storage, the present invention can find application in the production of other rolled components intended for batteries or supercapacitors.

In some embodiments, such as for example the one illustrated in Figure 1, the apparatus 100 may be used within a line for the production of coils for electrochemical cells, in which the tape-like article is made by means of a combination of several tapes, preferably overlapped in layers.

These tapes advantageously comprise at least two conductor tapes N1, N3 and two separator layers N2, N4, which are arranged alternately to form the tape-like article.

Thereby, the separator tapes can allow holding the two conductor tapes electrically separated from each other as they are wound, forming the coil intended for the electrochemical cell.

In preferred embodiments, the tapes are provided by special dispensing devices which, by way of example, can be formed by large-sized coils in which the tape is collected so as to be unwound and then provided during the operation of the apparatus.

With reference to Figure 1, the dispensing devices of the tapes N1, N2, N3 and N4 are indicated with 2; they each comprise a pair of unwinding devices 3 that operate by alternately unwinding a pair of respective dispensing windings 8 that are provided to the apparatus 100 as a supply of the respective tape.

Each unwinding device 3 supplies a respective first dynamic storage device 4 of the tape, in which the unwound tape is stored for the next dispensing, which occurs thanks to a special tape-drawing device. Each tape follows a respective path that guides it to a subsequent supply unit 20. A second dynamic storage device 5 of the tape can be provided in this path, in particular for the tape that is dispensed in larger quantities.

The dispensing devices 2 of the separator tapes N2, N4 are combined in a first dispensing compartment 6, which is the farthest away from the next winding unit, which will be described below.

The dispensing devices 2 of the conductor tapes N1, N3 are instead arranged in a second dispensing compartment 7, which is instead closer to the next winding unit, and which comprises a second dynamic storage device 5 of the tape.

In fact, the separator tapes N2, N4 also enter the second dispensing compartment 7 through a passage section 24, and travel entirely through to reach to the next supply unit 20 together with the conductor tapes N1, N3.

The supply unit 20, in preferred embodiments, is responsible for combining the tapes with each other so as to form the tape-like article when it is wound by a relative winding unit 50, the features of which will be described in detail below.

With reference to Figures 1 and 2, the winding unit 50 is arranged immediately downstream of the supply unit 20 so as to receive the tapes N1, N2, N3, N4 to make a tape-like article therefrom.

The supply unit 20 and the winding unit 50 are both connected to a frame 60 in a respective predetermined position, so that the units 20, 50 are facing each other, and so that the tapes N1, N2, N3, N4 can be conveyed from one to the other without any alteration of their speed or tension.

With reference to Figure 2, the frame 60 single support plate 61 extends vertically in the frame 60 so as to allow the positioning and fixing of all the members of the aforesaid units 20, 50.

The frame 60 has a box-like structure mounted on feet 62.

The supply unit 20 comprises a first inlet section 21, preferably adapted to receive the tapes from the respective dispensing devices mentioned above, while the winding unit comprises a respective second inlet section 22, through which said tapes transit out of the supply unit 20 and are supplied to the winding unit 50.

Between the first inlet section 21 and the second inlet section 22, a tape supply path is thus defined, which extends over the entire space defined for the supply unit 20 itself. The inlet sections 21, and 22 are indicated schematically by substantially vertical dashed lines in Figures 1 and 2.

It will be appreciated that the tapes N1, N2, N3, N4, before being provided to the supply unit 20, may pass through further units, always along a respective supply path, e.g. intended to carry out preliminary processing on the tapes. For example, the conductor tapes may be subjected to preliminary ablation operations so as to form a relative outer edge in order to favour the connections with the further conductor portions within the electrochemical cell.

Through the second inlet section 22, the tapes N1, N2, N3, N4 enter the winding unit 50 where they come into contact with a respective inlet element which, in the present example embodiment, is a passive inlet roller 52 which in turn defines, for each tape N1, N2, N3, N4, a respective inlet section 550 of the tape in the winding unit 50.

In general, a passive roller is intended as a roller adapted to deflect a respective tape from an outlet direction to an inlet direction, and this passive roller is idle, or in any case does not cause additional tension on the tape.

At the inlet roller 52, which is fixed with respect to the frame 60, the tape supply path is deflected in the direction of a winding assembly 55 of the winding unit 50, which will have one or more winding heads.

Therefore, it is envisaged that the tapes N1, N2, N3, N4 are advanced along different directions to converge towards the winding assembly 55, which is located in a fixed position with respect to the frame, where they are all coupled into a single multilayer structure forming the tape-like article.

According to the present example embodiment, the winding assembly 55 comprises a casing 65 within which a wheel 66 is held which is driven in rotation about an axis 59; the wheel 66 has three protruding arms 53 with a radial star configuration, and each of such arms 53 drags a respective winding head 51 provided with a winding pin, configured to receive the end of the tapes to be wound.

The arms 53 draw the winding heads 51 in a revolutionary motion about the axis 59, while each winding head 51 is driven in rotation, moving within the winding assembly 55 (Figures 3 and 4).

The winding assembly 55 comprises an alignment device 56 that aligns the tapes N1, N2, N3 and N4 conveyed therein through the winding unit 50, so that they are joined in a tape-like article N that will be wound by a respective winding head 51. In this regard, a gripper 54 is provided in the alignment device 56.

As can be seen in Figure 4, in the winding assembly 55, a head 51 is performing the winding operation, while the other heads not active in winding, indicated by 51', are transporting the wound coil of tape-like article N at an extraction device 57, passing by a cutting device 58 of the assembly 55, which cuts the tape-like article N.

The gripper 54 can also be associated with a corresponding additional cutting device which, if necessary, cuts one of the tapes to create a break in the continuity of that tape within the overall tape-like article.

In preferred embodiments, the additional cutting device can occur by means of a knife or another device such as for example a laser ablation system.

Therefore, the assembly 55 contains three heads configured to wind a tape-like article N, which move in a planetary motion in the casing 65, but only one of them performs the winding operation at a time, and is indicated as winding head 51.

In other examples of embodiments of winding assemblies, one or more winding heads may be provided, possibly fixed or translating from a winding position to another unloading position, but, for the purposes of the definition of the present invention, in particular for measuring the straight clearance of the winding unit inlet section from the winding head, the position of the winding head is considered to be that of the head which is winding the tape-like article N.

In preferred embodiments, the tapes are continuously supplied inside the supply unit 50 towards the respective winding head 51. In other words, each tape, or possibly one or more of the aforesaid tapes, is introduced into the supply unit 20 without ever stopping, proceeding with a speed greater than zero and, preferably substantially constant.

However, there may be the need to provide for interruptions of one or more of the tapes N1, N2, N3, N4 forming the tape-like article N or to slow down the advancement of one or more of the tapes for other operational needs linked to the specific processing being carried out.

For example, while making coils intended for making electrochemical cells, it may be envisaged that the conductor tapes N1, N3 that form anode and cathode, respectively, are not present in the terminal portion of the tape-like article that is wound to form the coil. In other words, it can be envisaged that the coil has a terminal and/or initial fin in which only the two overlapped separator tapes are present.

For this and other purposes, there may be envisaged, for each of the tapes N1, N2, N3, N4 forming the tape-like article N, a respective compensation device 40 in the supply unit 20, which is configured so as to store a quantity of at least one of said plurality of tapes in the apparatus 100.

In preferred embodiments, the compensation device 40 comprises at least one movable element, in particular a movable roller, which is configured so as to vary, by moving and assuming different positions, an overall length of the supply path of the respective tape.

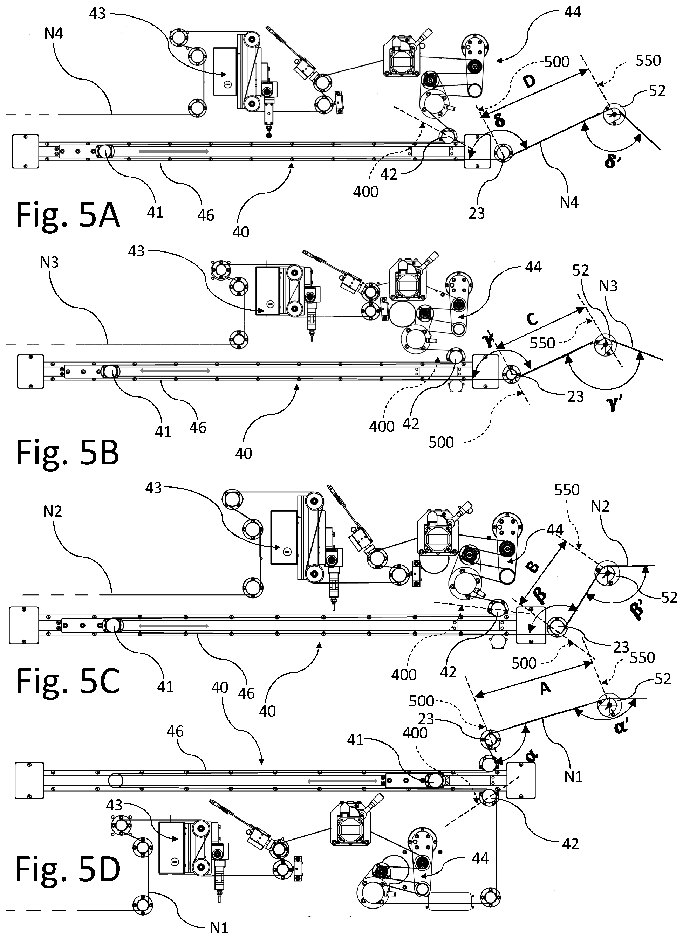

As illustrated in the example embodiment of the figures, and in particular in Figures 5A, 5B, 5C and 3D which each show a compensation device 40 of a respective tape N1, N2, N3, N4, each compensation device 40 comprises a movable roller 41 moving back and forth within a guide 46 which is, in this example, substantially horizontal.

The first compensation devices 40 are substantially parallel and coplanar to each other, and extend according to a main direction that is essentially horizontal.

The quantity of tape stored therein them can be variable, in the sense that the quantity of tape, in terms of length, that is stored can be expected to vary continuously during the different steps of the process, in order to meet specific requirements.

Each compensation device 40 comprises a fixed roller 42, which defines an access section 400 of the compensation device 40; it further comprises respective first tensioning device 43 and second tensioning device 44, which participate in the tensioning of the tape prior to passing through said access section 400 of the compensation device 40.

More in general, the access section is represented by the section of tape passage at the first point of contact between the tape and the first element of the compensation device that deflects or even only touches the tape in the advancing direction of the tape itself, such as for example the first roller or pair of rollers contacting the tape as it enters the compensation device.

In more detail, in the present example, the access section 400 is defined by the inflection point between tape and roller, or the point of contact in the absence of deflection, summarised with a dashed line in Figures 5A, 5B, 5C and 5D. However, it is understood that this section 400, which represents the access into the compensation device 40, could be made by various inlet members, such as for example deflector elements on which the respective tape slides, or by a set of wheels or pulleys, and not by a fixed roller.

Thereby, varying the clearance between the two movable and fixed rollers 41, 42, the length of the path that the tape has to take between the first inlet section 21 and the second inlet section 22 can be varied, in effect allowing the desired quantity of tape to be stored. Considering a constant or substantially constant advancing speed entering the supply unit 20, the part of the tape at the second inlet section 22 may be slowed down or stopped with respect to the other tapes.

Each compensation device 40 therefore comprises a respective outlet section 500, which, in the present example embodiment, is represented by the tape passage section at the last point of contact between the tape and the last element of the compensation device contacting the tape in the advancing direction of the tape itself, such as for example the last roller or pair of rollers deflecting or touching the tape as it exits the compensation device, which is defined herein as a respective passive outlet roller 23, which is idle or does not in any case cause additional tension on the tape.

Also in this case, this outlet section is defined by the inflection point between tape and roller, or the contact point in the absence of deflection, summarised with a dashed line in Figures 5A, 5B, 5C and 5D. However, it is understood that this section, which represents the exit from the compensation device, could be made by various outlet devices, such as deflector elements on which the respective tape slides, or by a set of wheels or pulleys, and not by a fixed roller.

It should also be noted that in preferred embodiments, the action of the movable roller 41, or more in general of the compensation device 40, may be associated with a tape retaining device arranged in the winding unit 50, and which is configured so as to slow down or stop the supply of one or more of the tapes.

In other words, the action of the compensation devices 40 can be coordinated with that of the winding unit 50, so that a compensation device 40 stores the tape when the respective retaining device slows or stops the tape supply.

It will be noted that the above-described compensation devices 40, each adapted to hold a quantity of tape of variable length, are positioned in a predetermined and fixed position in the supply unit 20 at a respective tape supply path, prior to the respective outlet section 500 of the passive exit roller 23 of the compensation device 40, which is also fixed with respect to the frame 60, to send the respective tape directly to the winding unit 50.

It will also be noted that the outlet sections 500 of the compensation devices 40 are substantially overlapped vertically to form a column, so that they are all arranged facing and in close proximity to the winding unit, minimising the clearance between it and the compensation devices 40.

Therefore, as has been described in detail above, the supply unit 20 is configured to supply a variable number of tapes N1, N2, N3, N4, i.e. at least one tape, to the winding unit 50, which is always fixed in the same predetermined position.

The winding unit 50 comprises therein the aforesaid winding head 51 which moves with respect to both the winding unit 50 itself, with inlet rollers 52, and with respect to the frame 60.

The inlet roller 52 defines an inlet section 550 of the winding unit 50 which is supplied with tape from the last compensation device 40 travelled by the respective tapes N1, N2, N3 and N4 in the internal path of the supply unit 20.

In more detail, this inlet section is also defined by the inflection point between tape and roller, or the contact point in the absence of deflection, summarised with a dashed line in Figure 2. However, it is understood that this section, which represents the inlet to winding unit 50, could be made by several inlet members, as discussed above.

In order to supply the supply head 51 with the tapes N1, N2, N3, N4 which form the tape-like element, they pass through the inlet section 550 of the winding unit 50 which is represented by the inlet roller 52 which is fixed with respect to the frame 60, at which the supply path of each tape is deflected in the direction of the winding head 51.

Therefore, for each tape N1, N2, N3 and N4, a first respective distance A, B, C and D can be identified between the first outlet section 500 of the first compensation device 40 and the second inlet section 550 of the winding unit 50, i.e., in the present example, substantially between the outlet roller 23 and the inlet roller 52, at the respective inflection or contact points with the respective tape N1, N2, N3, N4.

Furthermore, for each tape N1, N2, N3 and N4, a second respective distance A', B', C' and D' can be identified between the second inlet section 550 of the winding unit 50 and the active winding head 51 in the winding assembly 55.

According to the present invention, the value assumed by the first distance A, B, C and D is smaller than the minimum value assumed by the second distance A', B', C' and D', i.e. the distance between the outlet section 500 of the compensation device 40 and the second inlet section 550 of the winding unit 50 is smaller than the distance between the inlet section 550 of the winding unit 50 and the winding head 51.

The aforesaid distances are measured with reference to the deflection induced by the respective roller and by the inlet roller 52 or, in the case of zero deflection, by the point of contact, between the tape and the roller, or any member that replaces it.

As far as the winding head 51 is instead concerned, the second distance A', B', C' and D' is measured with reference to the rotation axis of the pin inside the active winding head 51 in the winding assembly 55.

Preferably, this first distance between inlet and outlet sections is less than 2.00 m, preferably less than 0.500.

By way of example, this first distance could have a value of 150 mm or 300 mm.

Furthermore, at said first outlet section 500 of the first compensation device 40, each tape N1, N2, N3 and N4 undergoes a deflection, which is produced in the present example by the outlet roller 23, which may vary from tape to tape, and which forms a first deflection angle, respectively indicated by α, β, γ, and δ (Figures 5A, 5B, 5C, 5D), which is generally between 100° and 180°.

Similarly, at the second inlet section 550 of the winding unit 50, which is produced in the present example by the inlet roller 52, each tape N1, N2, N3, and N4 undergoes an additional deflection which varies from tape to tape, and which forms a second deflection angle, respectively indicated by α', β', γ', and δ' (Figures 5A, 5B, 5C, 5D), which is generally between 100° and 180°.

In the present example embodiment of an apparatus for forming coils 100, it comprises, for certain working paths and preferably for those conveying conductor tapes, a third dynamic storage device 70 which is positioned inside the supply unit, upstream of the first compensation device 40, i.e. between this and the inlet sector 21 of the supply unit 20.

Similarly to the compensation devices, the third dynamic storage devices 70 also comprise movable and fixed elements, in particular rollers, within which a variable length of tape is stored and, between these rollers, the third dynamic storage device 70 is followed, in the path of the respective tape, by at least one active tension adjuster 75 of the tape tension, which comprises a tensioning roller 71 that is motorised so as to actively impose a tension on the tape.

This active tape tension adjuster will be positioned upstream of the compensation device 40.

In order to optimise space, the third dynamic storage device 70 extends according to a respective main direction that is generally inclined with respect to the main direction of the compensation device 40 and, in particular, it extends according to a respective main direction that is substantially perpendicular with respect to the main direction of the compensation device 40, so as to be substantially vertical.

Finally, it will be noted that the third dynamic storage and compensation devices, as well as the respective active tape tension adjusters, are all mounted on the same support plate 61 in a vertical position in the frame 60.

Thanks to the forming apparatus 100 described above, a method for making a coil can be achieved by winding at least one tape-like article.

This method comprises a step in which a supply unit is provided to supply at least one tape, suitable for making at least one tape-like article, e.g. four tapes, two of which are conductors and two separators, alternating with each other to form a coil of an electrochemical cell or other electrical storage device.

This is a winding unit that defines a respective supply path for each tape, which comprises an outlet section in a respective first predetermined position with respect to a fixed frame.

Subsequently, it is envisaged in the method that at least one winding head is provided which is provided to wind the tape-like article in a respective winding unit which, for each tape, has an inlet section in a respective second predetermined position in the frame with respect to the frame.

Acting on the devices which dispense and supply the tapes, the quantity of tape supplied, i.e. its respective supply speed, is adjusted at said inlet and outlet sections, and also in this regard, is a respective compensation device is provided comprising mutually movable compensation rollers, which defines the respective outlet section of the supply unit.

According to the present method, the distance between the outlet and inlet sections is smaller than the distance between the inlet section and the winding head.

According to further embodiments, a smaller or greater number of tapes is envisaged with respect to what has been described above, achieving different combinations of types of materials used, thicknesses of the relative tapes, etc.

Obviously, a person skilled in the art may, in order to meet specific and contingent application requirements, make further modifications and variants to the above-described invention, all falling within the scope of protection as defined by the following claims.

## Claims

1. An apparatus (100) for making a coil which comprises:
• a frame (60);
• a supply unit (20) configured to supply at least one tape (N1, N2, N3, N4), suitable for making at least one coil, released from a respective supply device (2), the supply unit (20) comprising at least one respective supply path for each tape (N1, N2, N3, N4);
• a winding unit (50), connected to the frame (60) in a predetermined position, including at least one winding head (51), configured to wind said tape (N1, N2, N3, N4) so as to make said coil, comprising a respective gripping device (54) which is configured to grip a portion of said at least one tape,
wherein, at at least one supply path, the supply unit (20) comprises at least one respective compensation device (40) adapted to hold a quantity of tape of variable length, an outlet section (500) of the compensation device (40) being provided in the compensation device, (40) which is fixed with respect to the frame (60), and from which the respective tape is sent to the winding unit (50);
and wherein the winding unit (50) comprises, for each tape, an inlet section (550) of the winding unit (50) which is fixed with respect to the frame (60), wherein the tape supply path is directed in the direction of the winding head (51);
the distance (A, B, C, D) between the outlet section (500) of the compensation device (40) and the inlet section (550) of the winding unit (50) being smaller than the distance (A', B', C', D') between the inlet section of the winding unit (50) and said at least one winding head (51).

2. The apparatus (100) according to claim 1, wherein said at least one tape comprises one or two pairs of tape, each pair of tape comprising a conductor tape and a separator tape, respectively.

3. The apparatus (100) according to any one of the preceding claims, wherein the compensation device (40) comprises at least one movable roller (41) and at least one fixed roller (42), which are configured to vary the distance therebetween, so as to hold said quantity of tape of variable length tensioned therebetween and with respect to said outlet section of the compensation device (40).

4. The apparatus (100) according to any one of the preceding claims, wherein the distance (A, B, C, D) between the outlet section of the compensation device (40) and the inlet section of the winding unit (50) is less than 500 mm.

5. The apparatus (100) according to any one of the preceding claims, wherein the compensation devices (40) of the apparatus extend according to a main direction which is substantially horizontal.

6. The apparatus (100) according to any one of the preceding claims, wherein for at least one supply path of at least one tape (N1, N2, N3, N4), said supply unit comprises an additional compensation device (70) upstream of the compensation device (40).

7. The apparatus (100) according to claim 6, wherein said additional compensation device (70) extends according to a respective main direction which is inclined with respect to the main direction of the subsequent compensation device (40) with respect to the supply path of the tape (N1, N2, N3, N4).

8. The apparatus (100) according to claim 7, wherein said additional compensation device (70) extends according to a respective main direction which is substantially perpendicular to the main direction of the subsequent compensation device (40) with respect to the supply path of the tape (N1, N2, N3, N4).

9. Apparatus (100) according to any one of the preceding claims between 6 and 8, wherein there is at least one active adjuster for the tension of the tape between the compensation device (40) and the additional compensation device (70).

10. The apparatus (100) according to any one of the preceding claims, wherein said winding head (51) is movable along said working path in such a manner that said at least one tape-like article is subjected to a substantially constant tension during the winding, i.e., to a tension varying no more than ±20% during the operating steps of the apparatus (100).

11. A method for making a coil by winding at least one tape-like article, comprising the steps of:
• providing a supply unit for supplying said at least one tape (N1, N2, N3, N4), suitable for making at least one tape-like article, defining, for said at least one tape (N1, N2, N3, N4), a respective supply path for said at least one tape (N1, N2, N3, N4) and which comprises at least one compensation device (40) adapted to hold a quantity of variable length of said at least one tape (N1, N2, N3, N4), comprising a respective outlet section (500) of the compensation device (40);
• providing a winding unit (50) comprising at least one winding head (51) arranged to receive said at least one tape (N1, N2, N3, N4) from said at least one compensation device (40) at a respective inlet section (550) of the winding unit (50);
• winding said at least one tape (N1, N2, N3, N4) by means of said at least one winding head (51);
• adjusting the supply quantity and/or speed of said at least one tape (N1, N2, N3, N4) at said outlet section (500) of said compensation device (40) and at said inlet section (550) of said supply unit (50) by means of said at least one compensation device (40),
wherein the distance (A, B, C, D) between the outlet section (500) of the compensation device (40) and the inlet section (550) of the supply unit (500) is smaller than the distance (A', B', C', D') between the inlet section (500) of the supply unit (50) and said at least one winding head (51).

12. The method according to claim 11, wherein said at least one compensation device (40) extends in a main direction which is substantially horizontal.

13. The method according to claim 11 or 12, wherein said at least one compensation device (40) comprises mutually movable compensation rollers.

14. The method according to any one of claims 11 to 13, wherein along the supply path (PA) of said at least one tape, said supply unit (20) comprises, upstream of said at least one compensation device (40), an additional dynamic storage device (70) for storing said at least one tape (N1, N2, N3, N4).

15. The method according to any one of the preceding claims 11 to 14, wherein, between the compensation device (40) and the dynamic storage device (70), the tension of the tape is adjusted by an active adjuster (75).
